# FASCICULE DE BREVET EUROPEEN

(11) **EP 1 080 475 B1**
(45) Date de publication et mention de la délivrance du brevet: **24.04.2002**
(21) Numéro de dépôt: 99922238.3
(22) Date de dépôt: 28.05.1999
(51) Int. Cl.: H01F 1/14, H01F 1/153

(54) **TEXTILE INDUCTIF ET UTILISATION D'UN TEL TEXTILE DANS DES DISPOSITIFS INDUCTIFS**
INDUKTIVES TEXTIL UND SEINE VERWENDUNG IN INDUKTIVE GERÄTE
INDUCTIVE TEXTILE AND USE OF SUCH A TEXTILE IN INDUCTIVE DEVICES

(30) Priorité: 28.05.1998 FR 9806743
(43) Date de publication de la demande: 07.03.2001
(73) Titulaire: COMMISSARIAT A L'ENERGIE ATOMIQUE, 75752 Paris Cédex 15 (FR)
(72) Inventeur: DUVERGER, François, F-37260 Monts (FR); ACHER, Olivier, F-37550 Saint Avertin (FR)
(74) Mandataire: Weber, Etienne Nicolas
(86) Numéro de dépôt international: FR9901263
(87) Numéro de publication internationale: WO9962082

(56) Documents cités:
- WO-A-95/23884
- WO-A-97/24734
- PATENT ABSTRACTS OF JAPAN vol. 008, no. 247 (E-278), 13 novembre 1984 (1984-11-13) & JP 59 124104 A (SUWA SEIKOSHA KK), 18 juillet 1984 (1984-07-18)
- PATENT ABSTRACTS OF JAPAN vol. 096, no. 004, 30 avril 1996 (1996-04-30) & JP 07 320931 A (TOKIN CORP), 8 décembre 1995 (1995-12-08)
- PATENT ABSTRACTS OF JAPAN vol. 098, no. 009, 31 juillet 1998 (1998-07-31) & JP 10 102316 A (TOKIN CORP), 21 avril 1998 (1998-04-21)
- PATENT ABSTRACTS OF JAPAN vol. 018, no. 392 (C-1228), 22 juillet 1994 (1994-07-22) & JP 06 108309 A (KURARAY CO LTD), 19 avril 1994 (1994-04-19)
- PATENT ABSTRACTS OF JAPAN vol. 095, no. 011, 26 décembre 1995 (1995-12-26) & JP 07 197311 A (JAPAN EXLAN CO LTD), 1 août 1995 (1995-08-01)

## Description

### Domaine technique

La présente invention concerne un textile présentant des propriétés inductives, et l'utilisation d'un tel textile, par exemple, dans des dispositifs inductifs tels que des dispositifs de transmission d'énergie ou de signaux, ou des dispositifs à capteurs inductifs susceptibles de détecter une variation de champ magnétique.

Au sens de la présente invention, on entend par textile un matériau, sous la forme d'une étoffe, composé d'un grand nombre de fibres et présentant une certaine cohésion. Le textile peut être un textile tissé, tel qu'un tissu, dans lequel des fibres sont réunies en fils et dans lequel les fils sont tissés, ou un textile non tissé dans lequel des fibres sont rendues cohérentes par enchevêtrement, par collage, ou par tout autre moyen.

L'invention trouve des applications, par exemple, dans la réalisation de dispositifs d'alimentation en énergie d'équipements électriques portables, tels que des radiotéléphones, ou dans des dispositifs de détection de passage. Elle trouve également des applications dans la fabrication de composants électriques ou électroniques.

### Etat de la technique antérieure

Dans le domaine de la fabrication de dispositifs électroniques et en particulier de dispositifs portables, la miniaturisation des composants et des circuits apparaît comme un objectif primordial. La miniaturisation des composants et des circuits permet, d'une part, d'offrir aux utilisateurs des dispositifs avec des fonctions plus élaborées et, d'autre part, de réduire le coût de ces dispositifs.

Des progrès importants ont été effectués en micro-électronique pour atteindre une intégration toujours plus grande des circuits et une réduction de leur coût de fabrication. Ces progrès sont cependant plus modestes pour la miniaturisation des étages de puissance des circuits et en particulier des étages d'alimentation en énergie.

De façon plus précise, il s'avère que la réalisation d'un certain nombre de composants inductifs, utilisés par exemple comme transformateurs ou comme selfs de lissage dans des alimentations à découpage, est peu compatible avec les exigences de miniaturisation et d'intégration des circuits.

Les composants inductifs se présentent généralement comme des composants comportant un noyau de ferrite ou sous forme de feuillards ferromagnétiques. Or, la réduction des dimensions de ces composants s'accompagne d'une diminution de la puissance électrique qu'ils sont susceptibles de supporter ou de fournir.

Par ailleurs, les techniques actuelles de fabrication des composants inductifs sont peu adaptées à une production de circuits en grande série et à faible coût.

### Exposé de l'invention

La présente invention a pour but de proposer un nouveau matériau inductif, utilisable dans des dispositifs électroniques miniaturisés.

Un but est également de proposer un tel matériau réalisable industriellement à faible coût.

Un but de l'invention est encore de proposer, grâce à ce matériau, un moyen permettant d'éviter d'installer dans des dispositifs électroniques portables des sources d'énergie volumineuses et coûteuses.

Un autre but est de proposer un matériau inductif utilisable comme vecteur d'énergie ou d'information, ainsi qu'un certain nombre d'applications ou d'utilisations d'un tel matériau.

Pour atteindre ces buts, l'invention a plus précisément pour objet un textile comportant une pluralité de filaments de matériau inductif, caractérisé en ce que les filaments, ferromagnétiques, sont équipés d'une couche superficielle isolante électrique et présentent une aimantation de saturation supérieure ou égale à 0,5T, et en ce que les filaments présentent une longueur supérieure à 10 mm et présentent sensiblement une même orientation, un écart maximum entre les orientations des filaments étant inférieur ou égal à 10°.

Un tel textile peut être fabriqué de façon industrielle, à l'instar de la fabrication du textile d'habillement et les coûts de production du textile peuvent être réduits en conséquence.

Le textile conforme à l'invention, encore appelé textile inductif, peut être utilisé comme vecteur d'énergie ou d'informations mais peut aussi être utilisé comme composant inductif dans des dispositifs électroniques. Des applications particulières du textile sont décrites dans la suite du texte.

Comme indiqué ci-dessus, la fabrication du textile de l'invention fait appel à des filaments de matériau inductif. Il s'agit, par exemple, de filaments en un matériau ferromagnétique tels que des filaments de CoFeSiB ou CoFeNiMoSiB. Avantageusement, on peut choisir un matériau ferromagnétique amorphe et doux, c'est-à-dire en particulier un matériau présentant un champ de saturation inférieur à 5 Oersted.

Les filaments ferromagnétiques sont de préférence gainés au moyen d'une couche superficielle électriquement isolante. Un choix avantageux consiste à utiliser des filaments ferromagnétiques amorphes gainés de verre.

Selon un aspect particulier de l'invention, le matériau ferromagnétique des filaments peut être un matériau présentant une magnétostriction négative comprise de préférence entre 5.10⁻⁵ et 0.

Les techniques de fabrication de ces filaments, de même que leurs caractéristiques propres, ne sont pas décrites ici. Les filaments métalliques, inductifs ou non, sont en effet connus en soi.

Les filaments ferromagnétiques isolés sont réalisés par exemple, selon une technique dite technique d'Ullitovsky Taylor.

A titre d'illustration, on peut se reporter à l'un des documents dont les références sont indiquées à la fin de la présente description.

Le textile inductif de l'invention peut être un textile tissé ou non. Il peut comporter, outre les filaments de matériau inductifs, des filaments, appelés filaments de structuration, en un matériau non inductif. Les filaments de structuration sont associés aux filaments inductifs pour conférer au textile sa cohésion. Les filaments de structuration peuvent être des filaments de fibres naturelles ou synthétiques utilisées usuellement dans l'industrie du textile et notamment pour la fabrication de textiles non tissés. De plus, les fibres du textile peuvent être noyées dans une résine, sous la forme d'un matériau composite.

Comme indiqué précédemment, on utilise des filaments de matériau inductif présentant de préférence une longueur supérieure à 10 mm et présentant sensiblement une même orientation, un écart maximum entre les orientations des filaments étant inférieur ou égal à 10°.

On considère que l'écart maximum des orientations des filaments est inférieur ou égal à 10° lorsqu'au moins 99% des filaments présentent une orientation qui ne s'écarte pas plus de 10% de l'orientation moyenne des fibres.

Le nombre de ces filaments est généralement supérieur à 1000. Le fait que des filaments, en grand nombre, présentent sensiblement une même orientation permet de canaliser efficacement un flux magnétique dans une direction privilégiée.

Le textile peut aussi être un textile tissé. Il comporte alors une pluralité de fils appelés fils inductifs, les fils pouvant être formés de filaments de matériau inductif tels que décrits précédemment et éventuellement de filaments de matériau non inductif associés aux filaments de matériau inductif.

Les fils peuvent comporter ainsi des filaments de matériau inductif tels que des filaments ferromagnétiques gainés de verre. La proportion des filaments ferromagnétiques est de préférence supérieure ou égale à 50%.

Les filaments non inductifs sont formés par exemple, de fibres synthétiques ou naturelles.

La formation des fils inductifs à partir des filaments peut avoir lieu par torsadage, par guipage ou par tout autre procédé de formation de fils.

Afin de ne pas altérer les propriétés magnétiques des fils inductifs, il est préférable de limiter la torsion des fils inductifs autour de leur axe à des valeurs inférieures ou égales à deux tours par mètre.

Les fils inductifs peuvent également être des fils ferromagnétiques formés directement par la technique d'Ullitowsky Taylor.

Ils sont préférentiellement isolés électriquement par une gaine de vernis ou de verre.

Pour pouvoir utiliser le textile inductif à des fréquences supérieures au Mégahertz, et en minimisant les pertes, on privilégie l'utilisation de fils ferromagnétiques avec un diamètre inférieur à 12 µm, voire inférieur à 8 µm. La gaine de vernis ou de verre est réalisée de préférence avec une épaisseur inférieure à 5 µm pour conserver aux fils leur souplesse.

Selon une réalisation particulière d'un textile conforme à l'invention, les fils inductifs peuvent être associés, notamment par tissage, à des fils dits non inductifs, c'est-à-dire qui ne présentent pas de propriétés magnétiques.

Les fils non inductifs sont, par exemple, des fils de Nylon, de coton, de laine, des fils de verre, de silice, de fibre aramide, ou tout autre type de fil utilisé habituellement pour la réalisation de textiles tissés.

Les fils non inductifs peuvent également être des fils présentant des propriétés particulières tels que des fils conducteurs électriques. Ces fils, par exemple en cuivre ou en un alliage à base de cuivre, sont préférentiellement isolés par une gaine, telle qu'un verni isolant.

Le textile tissé, peut comporter, de façon classique, des fils de chaîne et des fils de trame orientés de façon sensiblement perpendiculaire.

Dans ce cas, les fils de chaîne, respectivement de trame, peuvent être formés de préférence de façon majoritaire par des fils inductifs et les fils de trame, respectivement les fils de chaîne, peuvent être formés par des fils non inductifs et non conducteurs.

A titre d'exemple, les fils de chaîne peuvent être des fils à base de filaments ferromagnétiques et les fils de trame peuvent être des fils de fibres de verre.

Dans les textiles tissés, tels que décrits ci-dessus, les fils non inductifs ont essentiellement pour fonction de structurer le tissu. Toutefois, il n'est généralement pas utile que la masse des fils non inductifs excède le tiers de la masse totale du tissu obtenu.

Les textiles inductifs tels que décrits ci-dessus trouvent des applications pour la réalisation de composants inductifs tels que des transformateurs électriques ou des selfs de lissage. Dans ces composants, le textile inductif remplace le noyau inductif, usuellement à base de ferrite.

Le tissu inductif de l'invention, utilisé pour la formation de composants inductifs peut avantageusement être découpé et mis en forme pour constituer, par exemple, une coque, un boîtier ou une partie de boîtier d'un dispositif électronique.

La mise en forme du tissu inductif de l'invention peut être obtenue aisément grâce à des techniques connues de mise en forme de matériaux textiles ou composites.

Ceci constitue un avantage important par rapport aux dispositifs utilisant des rubans ferromagnétiques amorphes ou des feuillards d'alliage de haute perméabilité qui ne peuvent pas être conformés dans toutes les directions et dont la mise en forme fait appel à des techniques spécifiques plus complexes.

Lorsqu'on utilise un textile conforme à l'invention avec des fils présentant une forte perméabilité magnétique il est possible de créer dans chaque fil un flux magnétique local indépendant de celui des fils voisins. Il est possible ainsi de détecter, sans contact, la position d'objets de formes complexes recouverts du textile inductif de l'invention.

Selon une autre réalisation particulière du textile de l'invention, les filaments inductifs, réunis en fils ou non, peuvent être plantés sur un support de façon comparable à une moquette ou un velours. Le support est par exemple une couche de résine d'une épaisseur de 0,1 à 1 mm dans laquelle sont figés des brins de fils ou de filaments inductifs formant une moquette.

Dans ce cas également, les fils ou filaments inductifs peuvent être associés à des fils ou des filaments non inductifs et non conducteurs pour conférer à la moquette ou au velours un toucher particulier.

Ce textile peut être utilisé en association avec des bobines de mesure de flux magnétique pour former un détecteur de variation de flux magnétique.

A titre d'exemple un tel détecteur peut être utilisé pour détecter le passage d'objets équipés d'un aimant dans une zone ou un local. La zone ou le local sont alors équipés d'une moquette à filaments inductifs incluant des bobines de mesure du flux, reliées à un détecteur de flux magnétique.

L'invention concerne également un système de transmission d'énergie et/ou de signal d'une source d'énergie et/ou de signal vers un récepteur d'énergie et/ou de signal comprenant un moyen vecteur de flux magnétique, disposé entre la source d'énergie et/ou de signal et le récepteur d'énergie et/ou de signal. Le moyen vecteur de flux magnétique comporte un textile inductif tel que décrit ci-dessus.

L'invention concerne enfin un matériau composite comportant au moins une couche de textile inductif tel que décrit.

D'autres caractéristiques et avantages de la présente invention ressortiront mieux de la description qui va suivre, en référence aux figures des dessins annexés. Cette description est donnée à titre purement illustratif et non limitatif.

### Brève description des figures

- La figure 1 montre, de façon schématique et très agrandie, une portion de textile inductif tissé conforme à l'invention, utilisée comme vecteur de flux magnétique.
- La figure 2 montre de façon schématique une portion de textile inductif non tissé, conforme à l'invention, utilisée comme vecteur de flux magnétique.
- La figure 3 illustre de façon schématique une utilisation du textile de l'invention pour l'alimentation d'un dispositif électronique portable.
- La figure 4 illustre de façon schématique une utilisation du textile de l'invention dans un détecteur de passage.
- Les figures 5 et 6 illustrent de façon schématique une utilisation du textile de l'invention dans la réalisation de transformateurs.

### Description détaillée de modes de mise en oeuvre particuliers de l'invention

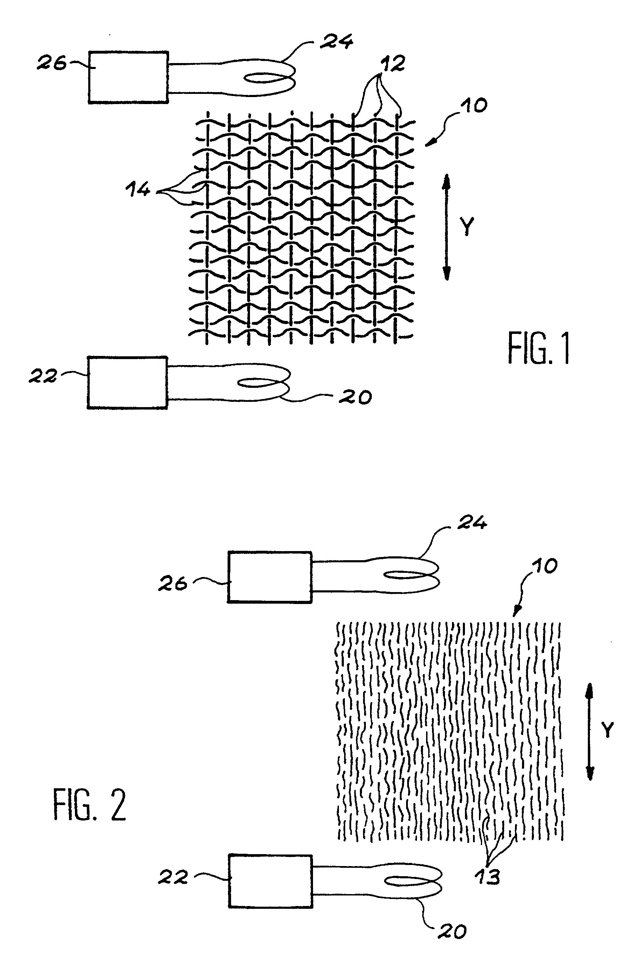

La référence 10 de la figure 1 désigne une portion de textile inductif tissé conforme à l'invention. Pour des raisons de clarté, la portion de textile 10 est fortement agrandie.

Le textile 10 comporte des fils de chaîne 12 réalisés notamment à partir de filaments ferromagnétiques gainés de verre et de fils de trame 14 tissés autour des fils de chaîne. Les fils de chaîne 12 sont des fils dits inductifs et les fils de trame 14 sont des fils non inductifs tels que des fils de coton, par exemple. On observe que les fils inductifs de chaîne présentent une orientation selon une direction Y repérée avec une flèche sur la figure 1.

Comme indiqué précédemment, le textile de la figure 1 peut être utilisé comme vecteur d'un flux magnétique alternatif et transmettre de l'énergie électrique ou éventuellement des signaux électriques sous la forme d'un champ magnétique hyperfréquence à une fréquence comprise par exemple entre 1 MHz et 1GHz.

Une première bobine 20 dite bobine inductrice est reliée à une source 22 de courant alternatif et est située à une première extrémité du textile selon la direction Y. La bobine est disposée par exemple en face des extrémités des fils inductifs. Selon une variante, elle peut aussi entourer tout ou partie du textile.

La source de courant 22 peut être une source de courant à haute fréquence lorsqu'on souhaite transmettre de l'énergie électrique à travers le textile. Pour transmettre une énergie importante, on utilise de préférence des fils inductifs dont les filaments présentent une aimantation de saturation supérieure à 0,5 T.

La source de courant 22 peut également être modulée pour transmettre un signal électrique. La fréquence de modulation se situe typiquement dans une gamme de fréquence comprise entre 10 kHz et 1 GHz.

Une deuxième bobine 24, dite bobine réceptrice, est reliée à un dispositif récepteur 26 et est situé à une extrémité opposée du textile, selon la direction Y.

La bobine 24 peut fournir au récepteur 26 un courant d'alimentation induit par le flux magnétique acheminé par le textile jusqu'à cette bobine. La bobine 24 peut également fournir au récepteur 26 un signal qui est décodé dans le récepteur.

Les bobines 20 et 24 se présentent sous la forme d'un enroulement autour d'un axe d'enroulement et sont positionnées de préférence de telle façon que l'axe d'enroulement forme avec la direction Y des fils inductifs de chaîne 12, un angle compris entre 0 et 80°. En d'autres termes, on évite que la direction Y des fils inductifs et l'axe d'enroulement des bobines soient perpendiculaires.

La figure 2 montre l'utilisation d'un textile non tissé dans une configuration semblable à celle de la figure 1.

Pour des raisons de simplification, des éléments de la figure 2 et des figures suivantes, qui sont identiques ou similaires à ceux de la figure 1, portent les mêmes références, de sorte que l'on puisse se reporter à la description qui précède.

Le textile 10 de la figure 2 comporte un enchevêtrement de filaments ferromagnétiques 13, gainés de verre, qui présentent tous sensiblement une même orientation selon une direction Y.

Des filaments de structure, non référencés, isolants électriques dont l'orientation est indifférente, peuvent être associés aux filaments ferromagnétiques 13 pour améliorer la cohésion du textile. Les filaments de structure, non inductifs, peuvent être à base de fibres usuelles, naturelles ou synthétiques.

On observe également que les bobines inductrice et réceptrice sont agencées de façon que leur axe d'enroulement soit sensiblement parallèle à la direction Y des filaments ferromagnétiques.

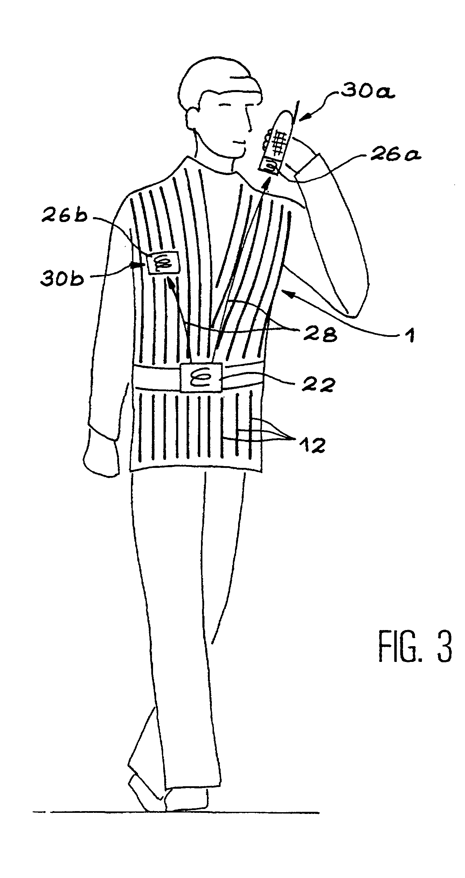

La figure 3 montre une utilisation particulière du textile de l'invention pour l'alimentation d'un équipement électronique portable.

La référence 1 de la figure 3 désigne un vêtement réalisé à partir d'un textile conforme à l'invention. Dans ce vêtement, les fils inductifs du textile sont agencés de façon à présenter une direction particulière. Dans l'exemple de la figure 3, le vêtement est un gilet (ou une chemise) et les fils inductifs 12 du textile s'étendent sensiblement le long du corps de la personne qui porte le vêtement.

La personne porte à sa ceinture une source d'énergie électrique 22, par exemple à piles ou à batteries, équipée d'une bobine d'induction, pour émettre un flux magnétique 28.

Ce flux magnétique 28 est canalisé par les fils ou les filaments inductifs du textile jusqu'à la partie supérieure du vêtement, c'est-à-dire jusqu'au col ou jusqu'aux épaules du gilet. Le parcours du flux magnétique est schématisé sur la figure 1 au moyen de flèches.

La référence 30a désigne un appareil électronique tel qu'un radiotéléphone équipé d'un récepteur 26a avec une bobine de réception. La bobine de réception est traversée par le flux magnétique 28, canalisé par le textile inductif jusque dans la région d'utilisation du radiotéléphone.

La référence 30b désigne un autre appareil électronique tel que, par exemple, une broche équipée d'un jeu de diodes électroluminescentes, portée par l'utilisateur ou l'utilisatrice comme un bijou. La broche équipée d'un récepteur 26b avec une bobine de réception, peut être fixée en un endroit quelconque du vêtement parcouru par les fils inductifs et être alimentée ainsi en énergie pour provoquer un jeu de lumière.

De la même façon, des appareils électroniques tels que des calculatrices ou des agendas ou des appareils de reproduction sonore peuvent être équipés de récepteurs de flux magnétique et alimentés par des fils ou des filaments inductifs s'étendant, par exemple, jusque dans un manche du vêtement équipé du tissu inductif.

Grâce au dispositif de la figure 3, il est possible d'affranchir les dispositifs électroniques portables des contraintes de poids et de volumes liées à des sources d'énergie autonomes.

Les batteries ou piles d'alimentation des équipements portables sont remplacées par le récepteur d'énergie magnétique qui peut être réalisé de façon peu encombrante et particulièrement légère.

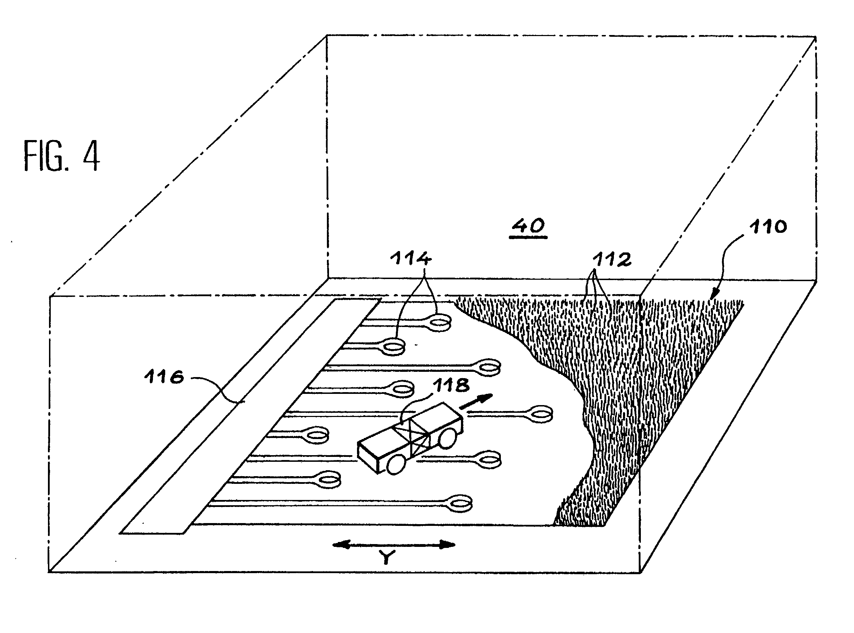

La figure 4 montre encore une autre application de l'invention pour la détection de passage d'objets équipés d'aimants.

La référence 40 désigne un local dont le sol est recouvert par une moquette 110 qui conformément à l'invention comporte une pluralité de brins 112 formés par des fils ou des filaments en un matériau inductif.

Les brins se dressent sur une couche de support dans laquelle, ou en-dessous de laquelle sont agencées des bobines 114 sensibles au flux magnétique. Ces bobines sont couplées aux filaments et sont électriquement reliées à un (ou plusieurs) détecteur(s) de flux magnétique 116. Le détecteur mesure un courant généré dans les bobines en réponse à une variation du flux magnétique.

La référence 118 désigne un aimant susceptible de se déplacer dans la zone ou le local équipé de la moquette. L'aimant 118 est par exemple solidaire d'un chariot se déplaçant dans le local.

Le passage de l'aimant au voisinage des brins de moquette provoque une variation du flux magnétique vu par les bobines associées aux brins. Les bobines situées sur le passage de l'aimant délivrent donc des signaux qui sont reçus par le détecteur 116. Celui-ci peut être conçu pour établir à partir des signaux reçus, le passage d'un objet équipé d'un aimant et, éventuellement sa vitesse et/ou le sens de passage.

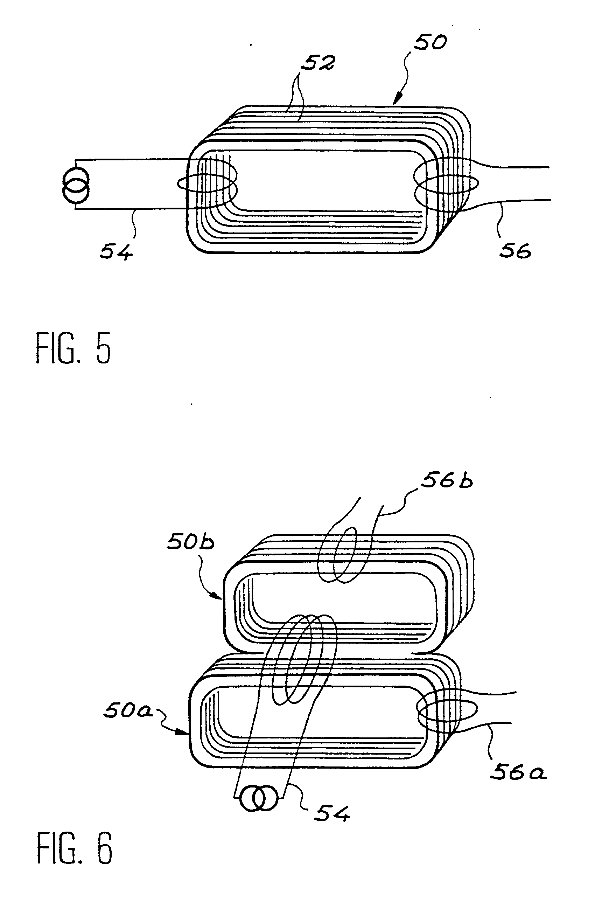

La figure 5 montre une utilisation d'un textile inductif conforme à l'invention pour la réalisation d'un transformateur.

Une bande de textile inductif comprenant des fils inductifs est repliée sur elle-même en un ou plusieurs plis pour former l'armature 50 d'un transformateur. Cette armature, de section circulaire, carrée ou rectangulaire peut comporter par exemple de 1 à 100 épaisseurs de textile. Sur la figure 5, l'orientation des filaments ou fils inductifs est représentée schématiquement avec la référence 52. Elle s'étend dans la direction du circuit magnétique formé par l'armature 50.

Un premier et un deuxième enroulements 54, 56 autour de l'armature 50 forment respectivement le circuit primaire et le circuit secondaire du transformateur.

Le nombre de plis de textile formant l'armature 50 (1 à 100), le nombre de tours des enroulements primaire et secondaire, compris par exemple entre 10 et 10000, sont ajustés en fonction de la destination ou la fréquence de fonctionnement souhaitée pour le transformateur.

Des fréquences de fonctionnement de 10kHz à 1GHz peuvent être atteintes.

A titre de variante, un seul enroulement autour de l'armature 50 peut aussi être utilisé comme self de lissage.

Selon une autre variante, illustrée par la figure 6, un transformateur à alimentation distribuée peut également être réalisé.

Le transformateur de la figure 6 comporte une armature 50a, 50b de textile conforme à l'invention formant deux circuits magnétiques de section différente. Un enroulement primaire 54 est formé sur une partie de l'armature commune aux deux circuits magnétiques.

Des enroulements 56a, 56b respectivement formés sur les deux circuits magnétiques différents permettent de recevoir respectivement une partie du flux magnétique produit par l'enroulement primaire.

Un tel transformateur peut être utilisé pour la distribution d'énergie à différents dispositifs électriques.

### DOCUMENT CITES

***(1)***
   "A method of drawing metallic filaments and a discussion of their properties and uses"
   Phys. Rev. Vol. 23 (1924), p. 655
   de G.F. TAYLOR
***(2)***
   "Preparation and Properties of Amorphous Wires"
   IEEE Transactions on magnetics, vol. 31, N° 2, march 1995, p. 1219
   de I. Ogasawara et al.
***(3)***
   "Investigation of high frequency permeability of thin amorphous wires"
   IEEE Transactions on magnetics, vol. 30, n°6, November 1994, p. 4542 de Olivier Acher et al.
***(4)***
   "Dictionally alternating domain wall propagation in bistable amorphous wire"
   Appl. Phys. Lett. 62(1), 4 January 1993, p. 108, de G. Gomez-Polo et M. Vazquez
***(5)***
   "The remagnetization process in thin and ultra-thin Fe-rich Amorphous wires"
   Journal of Magnetism and Magnetic Materials 151 (1995), p. 132,
   de A.P. Zhukov et al.
***(6)***
   "Magnetic Bistability of Amorphous Wires and Sensor Application"
   IEEE Transactions on magnetics, vol 30, N°2, march 1994, p. 907,
   de M. Vazquez et al.
***(7)***
   "Influence of the Thermal Treatments and Mechanical Stress on the Magnetic Bistable Behaviour in a Co-Si-B Amorphous Wire"
   IEEE Transactions on Magnetics, vol. 29, n° 6, November 1993, p. 3475,
   de P. Aragoneses et al.
***(8)***
   "Axial and transverse magnetization processes of glass-coated amorphous microwires"
   Journal of Magnetism and Magnetic Materials 157/158 (1996), p. 143,
   de A. Zhukov et al.
***(9)***
   "Circumferential permeability in non magnetostrictive amorphous wires"
   J. Mater. Res. vol. 11, n°10, October 1996, Materials Research Society, p. 2486,
   de M.L. Sanchez et al.,
***(10)***
   "Magnetic properties of glass-coated amorphous and nanocrystalline microwires"
   Journal of Magnetism and Magnetic Materials, 160 (1996), p. 223,
   de M. Vazquez et al.,
***(11)***
   "The Magnetization Reversal Process in Amorphous Wires"
   IEEE Transactions on magnetics, vol. 31, n°2, March 1995, p. 1229,
   de M. Vazques et al.,
***(12)***
   "Effetc of Glass Removal on the Magnetic Behavior of FeSiB Glass-Covered Wires"
   IEEE Transactions on Magnetics, vol. 33, n°1, January 1997,
   de H. Chiriac et al.,
***(13)***
   "Amorphous glass-covered magnetic wires for sensing application"
   Sensors and Actuators A 59 (1997) p. 243-251,
   de H. Chiriac et al.,
***(14)***
   "Magnetic behavior of glass-covered amorphous wires"
   Journal of Magnetism and Magnetic Materials, 157/158 (1996) p. 227-228,
   de H. Chiriac et al.,
***(15)***
   "Internal stress distribution in glass-covered amorphous magnetic wires"
   Physical review, vol. 52, n°14, October 1995-II, p. 52,
   de H. Chiriac et al.,
***(16)***
   "Magnetic properties of glass insulated amorphous microwires"
   in "Nanocrystalline and non-crystalline materials (1995) et. Vazquez and Herando (Worid Scientific, Singapore), p. 567
   de S.A. Baranov et al.,
***(17)***
   "Ferromagnetic resonance in amorphous magnetic wires"
   Phys. Met. Metall., vol. 67, n°1, (1989), p. 70,
   de S.A. Baranov et al.,
***(18)***
   "Domain collapse in amorphous magnetostrictive wires"
   IEEE Transactions on magnetics, vol. 28, n°5, September 1992, p. 2922,
   de L.V. Panina et al.,

## Revendications

1. Textile (10) comportant une pluralité de filaments (12, 13) de matériau inductif, **caractérisé en ce que** les filaments, ferromagnétiques, sont équipés d'une couche superficielle isolante électrique et présentent une aimantation de saturation supérieure ou égale à 0,5T, et **en ce que** les filaments (13) présentent une longueur supérieure à 10 mm et présentent sensiblement une même orientation, un écart maximum entre les orientations des filaments étant inférieur ou égal à 10°.

2. Textile non tissé selon la revendication 1, comprenant en outre des filaments de structuration de matériau non inductif, associés aux filaments inductifs.

3. Textile selon la revendication 1, dans lequel les filaments sont en un matériau ferromagnétique doux et amorphe.

4. Textile selon la revendication 3, dans lequel les filaments présentent un champ de saturation inférieur à 5 Oersted.

5. Textile selon la revendication 1, dans lequel les filaments inductifs sont plantés sur un support à la façon d'un velours ou d'une moquette.

6. Textile tissé selon la revendication 1, comprenant une pluralité de fils (12) appelés fils inductifs, ces fils comprenant des filaments de matériau inductif.

7. Textile tissé selon la revendication 6, dans lequel les fils inductifs (12) présentent une torsion axiale inférieure à 2 tours/mètre.

8. Textile selon la revendication 6, dans lequel les fils comprennent au moins 50% de filaments ferromagnétiques, et des filaments de matériau non inductif.

9. Textile selon la revendication 1, dans lequel le matériau ferromagnétique est un matériau à magnétostriction négative ou nulle.

10. Textile selon la revendication 1, dans lequel les filaments de matériau inductif sont des filaments ferromagnétiques amorphes gainés de verre.

11. Textile tissé selon la revendication 6, comprenant en outre une pluralité de fils appelés fils non inductifs (14) et dans lequel les fils inductifs (12) et les fils non inductifs (14) sont associés par tissage.

12. Textile tissé selon la revendication 11, comportant des fils de chaîne et des fils de trame dans lequel les fils de trame sont majoritairement formés par des fils inductifs (12) et les fils de chaîne sont formés par des fils non conducteurs (14).

13. Textile tissé selon la revendication 11, comportant des fils de trame et des fils de chaîne dans lequel les fils de chaîne sont majoritairement formés par des fils inductifs (12) et les fils de trame sont formés par des fils non conducteurs (14).

14. Textile tissé selon la revendication 11, dans lequel les fils non inductifs (14) sont des fils isolants électriques choisis parmi des fils de nylon, de coton, de laine, les fils de verre, de silice, de fibre aramide.

15. Textile tissé selon la revendication 11, dans lequel les fils non inductifs (14) sont des fils conducteurs électriques recouverts d'une gaine isolante électrique, tels que des fils de cuivre ou d'alliage à base de cuivre, vernis.

16. Textile tissé selon la revendication 11, dans lequel une masse des fils non inductifs (14) est inférieure ou égale à un tiers de la masse totale du textile tissé.

17. Textile selon la revendication 1, dans lequel un nombre de filaments mis en oeuvre est supérieur à 1000.

18. Système de transmission d'énergie et/ou de signal par champ magnétique hyperfréquence, d'une source (20, 22) d'énergie et/ou de signal vers un récepteur (24, 26, 26a, 26b) d'énergie et/ou de signal, comprenant un moyen vecteur de flux magnétique, disposé entre la source d'énergie et/ou de signal et le récepteur d'énergie et/ou de signal, dans lequel le moyen vecteur de flux magnétique comporte un textile inductif conforme à la revendication 1.

19. Système de transmission d'énergie et/ou de signal selon la revendication 18, dans lequel le moyen vecteur de flux magnétique est un vêtement.

20. Système selon la revendication 19, dans lequel la source d'énergie et/ou de signal comporte une source de courant alternatif (22) de haute fréquence ménagée dans une ceinture.

21. Système selon la revendication 19, dans lequel le récepteur (26a, 26b) d'énergie et/ou de signal est ménagé dans un équipement électronique portable (30a, 30b) choisi parmi les équipements suivants : récepteur radio, radiotéléphone, agenda électronique, gadget à diodes électroluminescentes.

22. Système selon la revendication 18, dans lequel le champ magnétique hyperfréquence présente une fréquence comprise entre 1MHz et 1GHz.

23. Matériau composite comportant au moins une couche de textile selon la revendication 1.

24. Utilisation d'un textile inductif conforme à la revendication 1 pour la fabrication de transformateurs électriques.

25. Utilisation d'un textile inductif conforme à la revendication 1 pour la fabrication de selfs de lissage.

26. Dispositif de détection de variation de champ magnétique dans une zone comportant un textile conforme à la revendication 5, le dispositif comportant des bobines sensibles au flux magnétique couplées aux filaments du textile et au moins un détecteur de flux magnétique connecté aux bobines.

## Claims

1. Textile (10) comprising a plurality of filaments (12, 13) of inductive material, **characterized in that** the ferromagnetic filaments are fitted with an electrically insulating superficial layer and have a saturation magnetization greater than or equal to 0.5T, and **in that** the filaments (13) have a length greater than 10 mm and have approximately one and the same orientation, the maximum deviation between the orientations of the filaments being less than or equal to 10°.

2. Non-woven textile according to Claim 1, additionally comprising structural filaments of non-inductive material, associated with the inductive filaments.

3. Textile according to Claim 1, in which the filaments are made of a soft and amorphous ferromagnetic material.

4. Textile according to Claim 3, in which the filaments have a saturation field less than 5 Oersted.

5. Textile according to Claim 1, in which the inductive filaments are stuck onto a support in the manner of a velvet or a carpet.

6. Woven textile according to Claim 1, comprising a plurality of threads (12) called inductive threads, these threads comprising the filaments of inductive material.

7. Woven textile according to Claim 6, in which the inductive threads (12) have an axial twist that is less than 2 turns/meter.

8. Textile according to Claim 6, in which the threads comprise at least 50% of ferromagnetic filaments and filaments of non-inductive material.

9. Textile according to Claim 1, in which the ferromagnetic material is a material with a negative or zero magnetostriction.

10. Textile according to Claim 1, in which the filaments of inductive material are amorphous ferromagnetic filaments sheathed with glass.

11. Woven textile according to Claim 6, additionally comprising a plurality of threads called non-inductive threads (14) and in which the inductive threads (12) and the non-inductive threads (14) are joined together by weaving.

12. Woven textile according to Claim 11, comprising warp threads and weft threads in which the majority of weft threads are formed by inductive threads (12) and the warp threads are formed by the non-conducting threads (14).

13. Woven textile according to Claim 11, comprising weft threads and warp threads in which the majority of warp threads are formed by inductive threads (12) and the weft threads are formed by the non-conducting threads (14).

14. Woven textile according to claim 11, in which the non-inductive threads (14) are electrically insulating threads chosen from among nylon threads, cotton threads, wool threads and threads of glass, silica and aramid fibre.

15. Woven textile according to claim 11, in which the non-inductive threads (14) are electrically conducting threads covered with an electrically insulating sheath, such as lacquered threads of copper or copper based alloy.

16. Woven textile according to claim 11, in which the mass of non-inductive threads (14) is less than or equal to one third of the total mass of the woven textile.

17. Textile according to claim 1, in which the number of filaments used is greater than 1000.

18. System for energy transmission and/or signal transmission from an energy and/or signal source (20, 22) to an energy and/or signal receiver (24, 26, 26a, 26b) comprising a magnetic flux vector means, arranged between the energy and/or signal source and the energy and/or signal receiver in which the magnetic flux vector means comprise an inductive textile conforming to claim 1.

19. System for energy and/or signal transmission according to Claim 18, in which the magnetic flux vector means is a garment.

20. System according to Claim 19, in which the energy and/or signal source comprises a source (22) of high frequency alternating current fitted to a belt.

21. System according to Claim 19, in which the energy and/or signal receiver (26a, 26b) is fitted in a portable electronic piece of equipment (30a, 30b) chosen from among the following equipment : radio receiver, radio telephone, electronic diary, gadget with LEDs.

22. System according to Claim 18, in which the hyperfrequency magnetic field has a frequency of between 1 MHz and 1 GHz.

23. Composite material comprising at least one layer of textile according to Claim 1.

24. Use of an inductive textile conforming to Claim 1 for the manufacture of electrical transformers.

25. Use of an inductive textile conforming to Claim 1 for the manufacture of smoothing chokes.

26. Device for the detection of variation of a magnetic field in an area comprising a textile conforming to Claim 5, the device comprising coils sensitive to the magnetic flux coupled to the textile filaments and at least one magnetic flux detector connected to the coils.

## Patentansprüche

1. Textilprodukt (10), eine Vielzahl Elementarfasern (12, 13) aus induktivem Material umfassend,
**dadurch gekennzeichnet, dass** die Elementarfasern, die ferromagnetisch sind, mit einer elektrisch isolierenden Oberflächenschicht versehen sind und eine Magnetisierung mit einer Sättigung von über oder gleich 0,5T aufweisen, und dadurch, dass die Elementarfasern (13) länger sind als 10 mm und im Wesentlichen gleich ausgerichtet sind, wobei ein maximaler Unterschied zwischen den Ausrichtungen der Elementarfasern 10° oder weniger beträgt.

2. Nichtgewobenes Textilprodukt nach Anspruch 1, das außerdem den induktiven Elementarfasern zugeordnete Elementarfasern einer nichtinduktiven Strukturierung umfasst.

3. Textilprodukt nach Anspruch 1, bei dem die Elementarfasern aus einem weichen und amorphen ferromagnetischen Material sind.

4. Textilprodukt nach Anspruch 3, bei dem die Elementarfasern ein Sättigungsfeld von weniger als 5 Oersted haben.

5. Textilprodukt nach Anspruch 1, bei dem die induktiven Elementarfasern mit einem Träger einen Verbund bilden, nach Art eines Samts oder einer Moquette.

6. Gewobenes Textilprodukt nach Anspruch 1, das eine Vielzahl induktive Fäden genannte Fäden (12) umfasst, wobei diese Fäden Elementarfasern aus induktivem Material umfassen.

7. Gewobenes Textilprodukt nach Anspruch 6, bei dem die induktiven Fäden (12) eine Axialdrehung von weniger als 2 Umdrehungen/Meter aufweisen.

8. Textilprodukt nach Anspruch 6, bei dem die Fäden wenigstens 50% ferromagnetischer Elementarfasern und Elementarfasern aus nichtinduktivem Material umfassen.

9. Textilprodukt nach Anspruch 1, bei dem das ferromagnetische Material ein Material mit einer Magnetostriktion ist, die negativ oder null ist.

10. Textilprodukt nach Anspruch 1, bei dem die Elementarfasern aus induktivem Material glasummantelte amorphe ferromagnetische Elementarfasern sind.

11. Gewobenes Textilprodukt nach Anspruch 6, das außerdem eine Vielzahl nichtinduktive Fäden (14) genannte Fäden enthält und bei dem die induktiven Fäden (12) und die nichtinduktiven Fäden (14) miteinander verwebt sind.

12. Gewobenes Textilprodukt nach Anspruch 11, das Kettfäden und Schussfäden umfasst und bei dem die Schussfäden mehrheitlich durch induktive Fäden (12) gebildet werden und die Kettfäden durch nichtleitende Fäden (14) gebildet werden.

13. Gewobenes Textilprodukt nach Anspruch 11, das Kettfäden und Schussfäden umfasst und bei dem die Kettfäden mehrheitlich durch induktive Fäden (12) gebildet werden und die Schussfäden durch nichtleitende Fäden (14) gebildet werden.

14. Gewobenes Textilprodukt nach Anspruch 11, bei dem die nichtinduktiven Fäden (14) elektrisch isolierende Fäden sind, ausgewählt unter den Nylon-, Baumwoll- und Wollfäden, den Glas-, Siliciumdioxid- und Aramidfaser bzw. -fäden.

15. Gewobenes Textilprodukt nach Anspruch 11, bei dem die nichtinduktiven Fäden (14) mit einer elektrisch isolierenden Hülle überzogene elektrisch leitende Fäden sind, z.B. Fäden aus Kupfer oder einer Legierung auf der Basis von Kupfer, lackiert.

16. Gewobenes Textilprodukt nach Anspruch 11, bei dem eine Masse der nichtinduktiven Fäden (14) kleiner oder gleich einem Drittel der Gesamtmasse des gewobenen Textilprodukts ist.

17. Textilprodukt nach Anspruch 1, bei dem eine Anzahl verwendeter Elementarfasern größer als 1000 ist.

18. System zur Energie- und/oder Signalübertragung mittels Hyperfrequenz-Magnetfeld von einer Energie- und/oder Signalquelle (20, 22) zu einem Energie- und/oder Signalempfänger (24, 26, 26a, 26b), ein Magnetfluss-Trägermittel umfassend, angeordnet zwischen der Energie- und/oder Signalquelle und dem Energie- und/oder Signalempfänger, bei dem das Magnetfluss-Trägermittel ein induktives Textilprodukt nach Anspruch 1 umfasst.

19. System zur Energie- und/oder Signalübertragung nach Anspruch 18, bei dem das Magnetfluss-Trägermittel ein Kleidungsstück ist.

20. System nach Anspruch 19, bei dem die Energie- und/oder Signalquelle eine Hochfrequenz-Wechselstromquelle (22) ist, integriert in einem Gürtel.

21. System nach Anspruch 19, bei dem der Energie- und/oder Signalempfänger (26a, 26b) in eine tragbare elektronische Vorrichtung (30a, 30b) eingebaut ist, ausgewählt unter folgenden Vorrichtungen: Radioempfänger, Funktelefon, elektronische Agenda, LED-Spielzeug.

22. System nach Anspruch 18, bei dem das Hyperfrequenz-Magnetfeld eine zwischen 1 MHz und 1 GHz enthaltene Frequenz aufweist.

23. Verbundmaterial mit wenigstens einer Textilschicht nach Anspruch 1.

24. Verwendung eines induktiven Textilprodukts nach Anspruch 1 zur Herstellung elektrischer Transformatoren.

25. Verwendung eines induktiven Textilprodukts nach Anspruch 1 zur Herstellung von Glättungsdrosseln.

26. Vorrichtung zur Detektion der Veränderung eines Magnetfelds in einer ein Textilprodukt nach Anspruch 5 umfassenden Zone, wobei diese Vorrichtung magnetflussempfindliche Spulen, gekoppelt mit den Elementarfasern des Textilprodukts, und wenigstens einen mit den Spulen verbundenen Magnetflussdetektor umfasst.
